# EUROPÄISCHE PATENTSCHRIFT

(11) **EP 3 568 890 B1**
(45) Veröffentlichungstag und Bekanntmachung des Hinweises auf die Patenterteilung: **30.12.2020**
(21) Anmeldenummer: 18700474.2
(22) Anmeldetag: 09.01.2018
(51) Int. Cl.: H02G 1/12

(54) **ABISOLIERZANGE**
WIRE STRIPPER
PINCE À DÉNUDER

(30) Priorität: 12.01.2017 DE 102017100524
(43) Veröffentlichungstag der Anmeldung: 20.11.2019
(73) Patentinhaber: Knipex-Werk C. Gustav Putsch KG, 42349 Wuppertal (DE)
(72) Erfinder: HEINSOHN, Andreas, 42369 Wuppertal (DE); ZENZALE, Antonio, 42349 Wuppertal (DE)
(74) Vertreter: Müller, Enno
(86) Internationale Anmeldenummer: PCT/EP2018/050443
(87) Internationale Veröffentlichungsnummer: WO 2018/130517

(56) Entgegenhaltungen:
- DE-A1- 2 618 174
- DE-U- 1 966 742
- US-A1- 2003 070 300

## Beschreibung

### Gebiet der Technik

Die Erfindung betrifft zunächst eine Abisolierzange mit zwei in einem Gelenk drehbefestigten Zangenschenkeln, wobei die Zangenschenkel jeweils einen Arbeitsbereich und einen Griffbereich aufweisen, wobei weiter an den freien Enden der Arbeitsbereiche quergerichtet zu einer Schwenkebene der Zangenschenkel verlaufende Abisolierschneiden ausgebildet sind, die zum gegenseitigen Überfahren gestaltet sind, wobei weiter an einem der Arbeitsbereiche ein Einstellmittel, bspw. eine Einstellschraube, vorzugsweise eine Einstellschraube mit einer Halterungsmutter aufgenommen ist, um das Überfahren der Abisolierschneiden einstellbar zu begrenzen, und wobei darüber hinaus an jedem Arbeitsbereich eine Trennschneide vorgesehen ist, wobei die Trennschneide eines Arbeitsbereiches zur Zusammenwirkung mit der Trennschneide des anderen Arbeitsbereiches ausgebildet ist, deren Schneidkanten sich jeweils in Längsrichtung der Arbeitsbereiche erstrecken.

### Stand der Technik

Abisolierzangen der in Rede stehenden Art sind bekannt und finden insbesondere im Bereich von Elektroinstallationen Verwendung. Mittels der übereinanderfahrbaren Abisolierschneiden ist ein Isolationsabschnitt von der Isolation eines Kabels trenn- und abziehbar. Die Abisolierschneiden können, gemäß dem bekannten Stand der Technik, stirnseitig der Arbeitsbereiche im Bereich aufeinander zu gerichtet einwärts gebogener Abschnitte ausgebildet sein.

Auch ist es bekannt, ein Einstellmittel, bspw. in Form einer Einstellschraube mit Halterungsmutter vorzusehen, über welches Einstellmittel die maximale Zangenmaul-Schließstellung anschlagbegrenzt einstellbar ist. Entsprechend ist hierdurch eine Anpassung der Abisolierschneiden-Schließstellung erreichbar, zur Anpassung an die Dicke des abzuisolierenden Kabels. Die maximale Zangenmaul-Schließstellung wird über das Einstellmittel so begrenzt, dass mittels der Abisolierschneiden eine sichere Durchtrennung der Isolation erreicht wird, dies ohne Beschädigung der hiernach freigelegten Ader. Über das Einstellmittel wird das Größtmaß des Öffnungsquerschnitts im Bereich der Abisolierschneiden eingestellt, so bspw. ein Größtmaß von 1 mm oder 3 mm, bspw. bis hin zu 5 mm.

Um im Zuge der Elektroinstallation bspw. zur Ablängung von Kabel nicht einen Werkzeugwechsel vornehmen zu müssen, ist es weiter bekannt, eine solche Abisolierzange in einem zu den Abisolierschneiden gesonderten Bereich mit Trennschneiden zu versehen.

Zum Stand der Technik ist zunächst auf die DE 26 18 174 A1 zu verweisen. Bei der hieraus bekannten Abisolierzange sind die Zangen als Seitenschneider ausgebildet, die auch in der geschlossenen Stellung lediglich aufeinanderliegen. Bei einer aus der DE 1 966 742 U bekannten Abisolierzange ist eine Schneide durch eine Randkante einer Zangenbacke gebildet. Zudem ist das Einstellmittel in einer Seitenansicht hinter einer von dem anderen Zangenschenkel ausgehenden alleinigen Trennschneide angeordnet. Aus der US 2003/0070300 A1 ist es bzgl. einer Schere bekannt, die Scherenbacken mittels einer Kopfschraube zueinander zu verschrauben.

### Zusammenfassung der Erfindung

Ausgehend von dem dargelegten Stand der Technik beschäftigt sich die Erfindung mit der Aufgabenstellung, eine Abisolierzange der genannten Ausführungsformen handhabungstechnisch vorteilhaft auszubilden.

Diese Aufgabe ist zunächst beim Gegenstand des Anspruches 1 gelöst, wobei darauf abgestellt ist, dass die Trennschneiden einen als Mittenschneider ausgebildeten Schneidbereich bilden, dass die Trennschneiden als zum scherenartigen Überfahren geeignete Schneiden ausgebildet sind, dass die Trennschneiden über ihre gesamte Erstreckung, bezogen auf eine Längserstreckung der Abisolierzange, in der Geschlossenstellung der Abisolierzange übereinanderliegen und dass das Einstellmittel zum freien Ende des Arbeitsbereiches vorgelagert zu den Trennschneiden angeordnet ist.

Die Trennschneiden können im geschlossenen Zustand der Abisolierzange zu einem Größtmaß von bis zu 3, ggf. von bis zu 4 oder 5 mm oder mehr übereinandergefahren sein und maulseitig über ein größeres Maß in Öffnungsrichtung der Abisolierzange übereinanderliegen als gelenkseitig.

In einer der Ausgestaltungen ist in Längsrichtung der Arbeitsbereiche betrachtet eine klare Nebeneinandergliederung von Trennschneiden, Einstellmittel und Abisolierschneiden gegeben. Es ergibt sich eine deutliche funktionale Trennung der Bereiche. Die Trennschneiden sind zudem handhabungs- und funktionsgünstig nahe dem Gelenkbereich ausgebildet. Hierdurch ergibt sich eine Nutzung der Trennschneiden in einem stabilen, insbesondere verwindungsfreien Bereich der Zange.

Die Trennschneiden wirken scherenartig miteinander, ermöglichen so ein quetschfreies Schneiden von Kabeln. So können weiter diese Trennschneiden im geschlossenen Zustand der Abisolierzange maulseitig nicht oder nur wenig übereinanderliegen, gelenkseitig jedoch in einem größeren Ausmaß.

Die Trennschneiden liegen über ihre gesamte Erstreckung, bezogen auf eine Längserstreckung der Abisolierzange, und zwar ggf. in unterschiedlichem Ausmaß, in der Geschlossenstellung der Abisolierzange übereinander. Alternativ zu einer in der Längserstreckung - bei grundsätzlich ganz oder teilweise in Längsrichtung in Überdeckung befindlichen Trennschneiden -in unterschiedlichem Ausmaß übereinanderliegenden Trennschneiden ist es auch möglich, dass die Trennschneiden durchgängig mit einer gleichen Überdeckung übereinanderliegen oder jedenfalls im maulseitigen und gelenkseitigen Endbereich mit einer größeren Überdeckung zusammenliegen als in einem mittleren Bereich. In diesem Fall durchläuft die Überdeckung der Schneiden ein Minimum. Hierbei kann die größere Überdeckung im maulseitigen und gelenkseitigen Endbereich ein gleiches Maß aufweisen.

Die Trennschneiden, insbesondere deren Schneidkanten, wirken in einer Schneidebene, die im Wesentlichen gleichgerichtet läuft zu einer Schwenkebene der Zangenschenkel. Die Schneidebene der Abisolierschneiden kann, wie bevorzugt, im Wesentlichen senkrecht zur Schneidebene der Trennschneiden gerichtet sein.

Die Ausbildung der Abisolierzange, insbesondere die Ausbildung und Anordnung der Trennschneiden ist so gewählt, dass die Trennschneiden unabhängig von dem über das Einstellmittel eingestellten Größtmaß des Öffnungsquerschnitts im Abisolierbereich die geschlossene Stellung erreichen. Entsprechend wird unabhängig von dem eingestellten Größtmaß des Öffnungsquerschnittes eine gewünschte Durchtrennung bspw. eines Kabels unter Nutzung der Trennschneiden erreicht. Die über das Einstellmittel eingestellte Größe des Öffnungsquerschnitts im Abisolierbereich bleibt beibehalten.

Das Größtmaß des Öffnungsquerschnittes im Abisolierbereich kann 1 mm oder 2 mm, bis hin zu 3 mm oder 4 bzw. 5 mm betragen, ggf. auch mehr als 5 mm, wobei weiter jedes Zwischenmaß stufenlos einstellbar erreichbar ist, insbesondere jedes Zwischenmaß zwischen 0,5 und 5 mm, bspw. 1,7 oder 2,3, 3,8 mm.

Die Trennschneiden sind hinsichtlich des Gegenstandes des Anspruches 1 als Mittenschneiden ausgebildet, wobei die Schneidebene der Schneidkanten in oder unmittelbar benachbart zu einer Längsmittelebene der Zangenschenkel außerhalb der Trennschneiden und/oder des Gelenkbereiches verläuft. So kann diesbezüglich, wie auch bevorzugt, die Längsmittelebene der Zangenschenkel in den Griffbereichen oder auch in den Arbeitsbereichen außerhalb der Trennschneiden maßgeblich sein. Die Schneidebene kann, wie weiter bevorzugt, in dieser Längsmittelebene verlaufen. Eine im Sinne der Erfindung unmittelbar benachbarte, bevorzugt parallele Ausrichtung der Schneidebene zu der Längsmittelebene ist gegeben bei einem senkrecht zur Ebenenerstreckung gegebenen Abstand zwischen Schneidebene und Längsmittelebene, welcher Abstand maximal einem Fünftel, weiter bevorzugt maximal einem Zehntel oder einem Fünfzigstel des senkrecht zur Ebenenerstreckung betrachteten Dickenerstreckungsmaßes des Zangenschenkels im Bereich der Trennschneide entsprechen kann.

An einem oder beiden Arbeitsbereichen kann innenseitig an einander zugewandten Flächen zwischen dem Einstellmittel und den Abisolierschneiden eine zu den freien Enden der Arbeitsbereiche hin abfallende bzw. sich insgesamt erweiternde Stufung vorgesehen sein, wobei die Stufenkanten quer zu der Schneidebene der Trennschneiden verlaufen. Diese Stufung kann als Orientierungshilfe genutzt werden, insbesondere bei einem Abisolieren über Standardlängen von bspw. 11 oder 16 mm. Die Stufen können als Anschlag genutzt werden, darüber hinaus aber auch nur als optische Orientierung dienen.

Bei Arbeiten mit der Abisolierzange in engen, ggf. schwer zugänglichen Bereichen, wie weiter bspw. in Installationsschränken o. dgl., erweist sich eine Weiterbildung von Vorteil, bei welcher die Arbeitsbereiche der Zangenschenkel sich außenseitig in Richtung der Schneidebene der Trennschneiden erstreckende Flachseiten aufweisen, wobei zwei gegenüberliegende Flachseiten eines Zangenschenkels zum freien Ende des Arbeitsbereiches hin konisch verjüngend zueinander verlaufen. Diese konische Zuspitzung kann sich ausgehend vom Gelenkbereich bis zum freien Ende des Arbeitsbereiches erstrecken, dies bspw. unter Einschluss eines Konuswinkels einer Flachseitenebene relativ zu einer Parallelebene zur Schneidebene von 1,5 bis 3,5°, weiter bspw. 2,5 bis 3°.

In weiterer Ausgestaltung können die Zangenschenkel zur Ausbildung des Gelenks mittels einer Senkkopfschraube zueinander verschraubt sein. Eine solche geschraubte Gelenkverbindung erweist sich insbesondere im Zusammenhang mit einer kombinierten Ausgestaltung der Zange zum spitzenseitigen Abisolieren von Adern und Schneiden mittels scherenartig aneinander vorbei überfahrender Trennschneiden von Vorteil.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10-Schritten der jeweiligen Dimension, ggf. also auch dimensionslos. Bspw. beinhaltet die Angabe 1,5 bis 3,5° auch die Offenbarung von 1,6 bis 3,5°, 1,5 bis 3,4°, 1,6 bis 3,4° etc., die Angabe bis zu 3 mm auch die Offenbarung von bis zu 2,9 mm oder bis zu 2,1 mm, etc. die Angabe 0,5 bis 3 mm auch die Offenbarung von 0,6 bis 3 mm, 0,5 bis 2,9 mm, 0,6 bis 2,9 mm etc. Diese Offenbarung kann einerseits zur Eingrenzung einer genannten Bereichsgrenze von unten und/oder oben, alternativ oder ergänzend aber zur Offenbarung eines oder mehrerer singulärer Werte aus einem jeweilig angegebenen Bereich dienen.

### Kurze Beschreibung der Zeichnungen

Nachstehend ist die Erfindung anhand der beigefügten Zeichnung, welche lediglich ein Ausführungsbeispiel darstellt, näher erläutert. Es zeigt:
- Fig. 1: eine Abisolierzange der in Rede stehenden Art in Ansicht, betreffend eine maximal mögliche Zangenmaul-Schließstellung;
- Fig. 2: die Ansicht gemäß dem Pfeil II in Figur 1;
- Fig. 3: in perspektivischer Darstellung die Abisolierzange in der Stellung gemäß Figur 1;
- Fig. 4: die vergrößerte Stirnansicht gemäß Pfeil IV in Figur 1;
- Fig. 5: den vergrößerten Schnitt gemäß der Linie V-V in Figur 2;
- Fig. 6: eine Herausvergrößerung eines freien Arbeitsbereichendes in einer Ansicht entsprechend Figur 2;
- Fig. 7: den vergrößerten Schnitt gemäß der Linie VII-VII in Figur 1;
- Fig. 8: den vergrößerten Schnitt gemäß der Linie VIII-VIII in Figur 1;
- Fig. 9: den vergrößerten Schnitt gemäß der Linie IX-IX in Figur 1;
- Fig. 10: in vergrößerter Darstellung den Arbeitsbereich der Abisolierzange, betreffend eine Zangenmaul-Offenstellung;
- Fig. 11: eine der Figur 1 entsprechende Darstellung, eine anschlagbegrenzte Zangenmaul-Schließstellung (Abisolierstellung) betreffend;
- Fig. 12: den Schnitt gemäß der Linie XII-XII in Figur 11;
- Fig. 13: eine der Figur 5 entsprechende Schnittdarstellung, betreffend die Zangenmaul-Schließstellung gemäß Figur 11.

### Beschreibung der Ausführungsformen

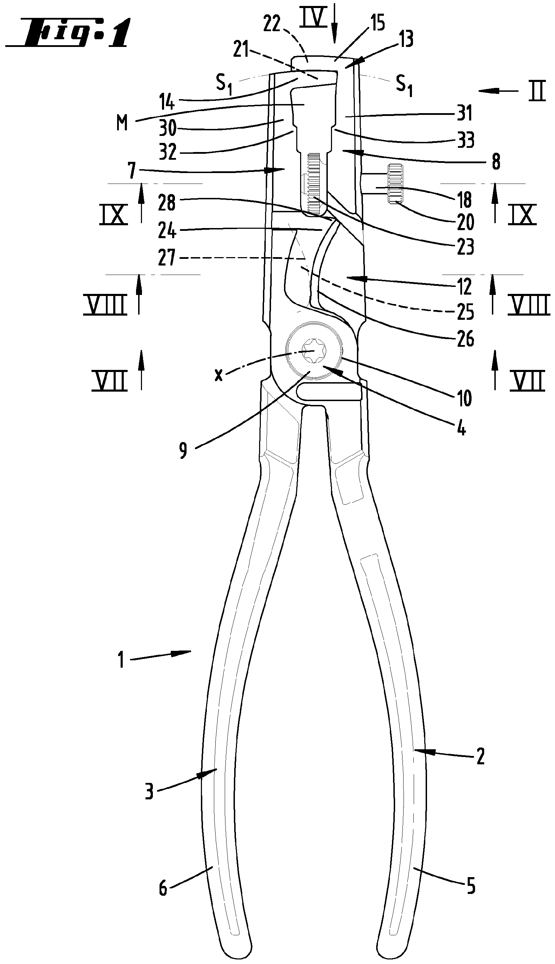

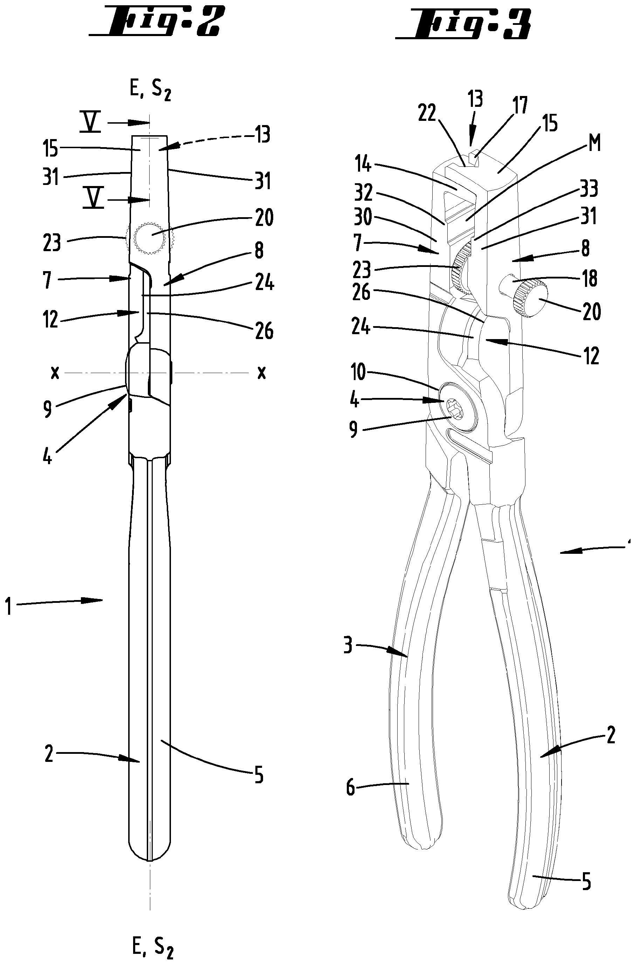

Dargestellt und beschrieben ist, zunächst mit Bezug zu den Figuren 1 bis 3, eine Abisolierzange 1, aufweisend zwei Zangenschenkel 2 und 3, die in einem Gelenk 4 um eine geometrische Gelenkachse x drehbar zueinander gehalten sind.

Jeder Zangenschenkel 2, 3 bildet im Wesentlichen ausgehend vom Gelenk 4 auf der einen Seite einen Griffbereich 5 bzw. 6 und auf der anderen Seite des Gelenks 4 einen Arbeitsbereich 7 bzw. 8 aus.

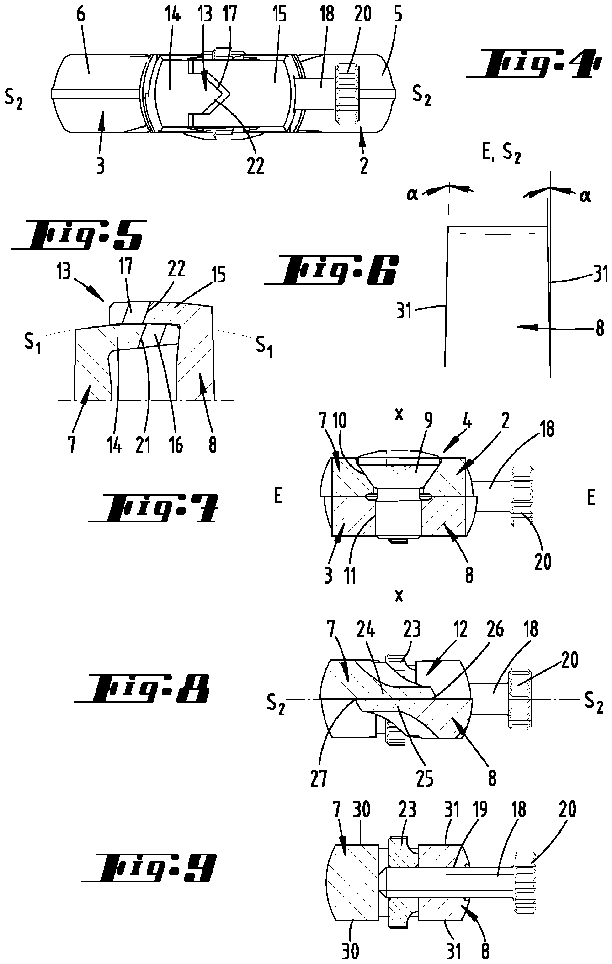

Zur Ausbildung des Gelenks 4 sind die Zangenschenkel 2 und 3 mittels einer Senkkopfschraube 9 verschraubt. Diese Senkkopfschraube 9 sitzt in einer dem Schraubenkopf formangepassten Vertiefung 10 des einen Zangenschenkels 2 ein und greift mit dem Schraubgewinde in eine Gewindebohrung 11 des anderen Zangenschenkels 3 ein (vgl. auch Figur 6).

Die Arbeitsbereiche 7 und 8 der Zangenschenkel 2 und 3 belassen zwischen sich ein Zangenmaul M.

Die Zangenschenkel 2 und 3 sind in einer insbesondere die Griffbereiche 5 und 6, sowie darüber hinaus die Arbeitsbereiche 7 und 8 im Bereich ihrer freien Enden, bevorzugt mittig durchsetzenden Längsmittelebene E zueinander schwenkbar.

Bezogen auf diese Längsmittelebene E sind im zusammengefassten Bereich der Arbeitsbereiche 7 und 8, ausgehend von dem Gelenk 4, hintereinander liegend zwei Schneidbereiche vorgesehen. So zunächst im Wesentlichen unmittelbar auf das Gelenk 4 folgend ein scherenartiger Schneidbereich 12 und endseitig der Arbeitsbereiche 7 und 8 ein Abisolierbereich 13.

Der Abisolierbereich 13 ist in bekannter Weise geformt zufolge aus der Längserstreckung der Zangenschenkelabschnitte im Arbeitsbereich 7 und 8 heraus aufeinander zu weisend gerichtete Schenkelabschnitte 14 und 15, die zum gegenseitigen Überfahren gestaltet sind. Hierbei unterfährt der mit Bezug auf die Gelenkachse x kürzer gewählte Zangenschenkelabschnitt im Arbeitsbereich 7 mit dessen Schenkelabschnitt 14 den Schenkelabschnitt 15 des anderen Zangenschenkelabschnittes im Arbeitsbereich 8.

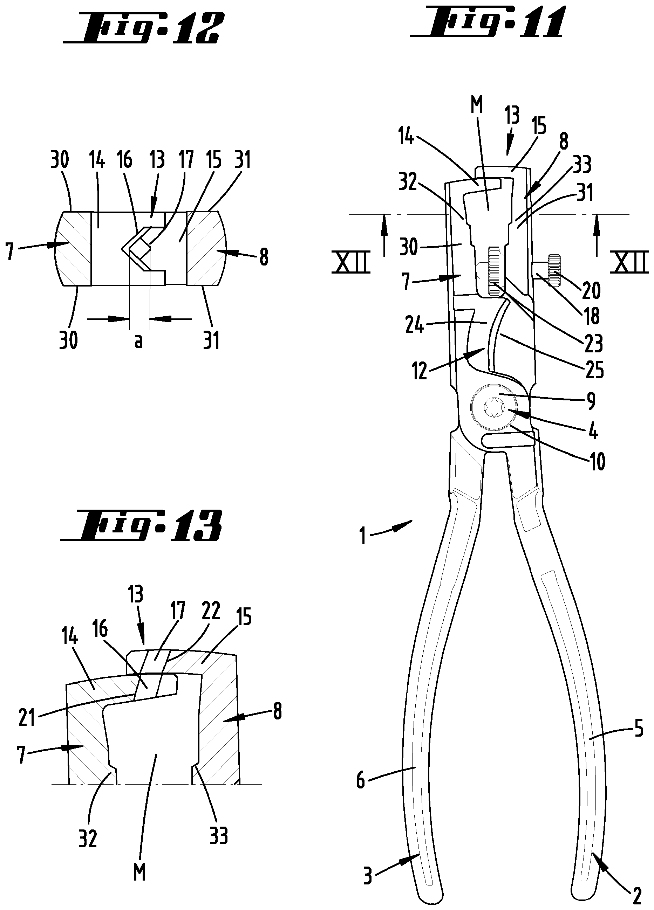

Von den Stirnseiten der Schenkelabschnitte 14 und 15 sind jeweils ausgehend Ausnehmungen 16 und 17 gebildet, die zusammengefasst einen prismenförmigen Öffnungsquerschnitt bilden (vgl. bspw. Figur 11). Die Kanten dieser Ausnehmungen 16 und 17 sind schneidenartig zugeschliffen, zur Ausbildung von Abisolierschneiden 21 und 22.

Die sich hierbei ergebende Schneidebene S₁ im Abisolierbereich 13 erstreckt sich im Wesentlichen senkrecht zur Längsmittelebene E, weiter mit Bezug auf einen Grundriss gemäß Figur 1 zumindest annähernd entlang einer sich auf die Gelenkachse x beziehenden, zwischen der stirnseitigen Außenseite des Schenkelabschnittes 14 und der zugewandten Innenseite des Schenkelabschnittes 15 verlaufenden Kreislinie (Schneidebene S₁ in Figur 1).

Die erreichbare Zangenmaul-Schließstellung ist anschlagbegrenzt einstellbar. Hierzu ist ein Einstellmittel 18 vorgesehen, das bei Ausbildung als Einstellschraube mit einem Außengewinde versehen in einer Gewindebohrung 19 eines Zangenschenkelabschnittes im Arbeitsbereich angeordnet ist. In dem dargestellten Ausführungsbeispiel ist die diesbezügliche Gewindebohrung 19 in dem Zangenschenkelabschnitt des Arbeitsbereiches 8 vorgesehen.

Über das Einstellmittel 18 ist das Größtmaß a des Öffnungsquerschnittes im Abisolierbereich 13 einstellbar (siehe Figur 12). Das Größtmaß a beträgt bspw. 1 mm, 1,5 mm, 2 mm, 2,5 mm oder auch 5 mm.

Die Einstellschraube durchsetzt die Gewindebohrung 19 gänzlich und tritt mit ihrem freien Ende in das Zangenmaul M ein, unter anschlagbegrenzender Abstützung des freien Endes an der zugewandten Schenkelfläche des gegenüberliegenden Arbeitsbereiches 7 im Zangenmaul M.

Zangenaußenseitig ist das Einstellmittel 18 mit einer rändelförmigen Handhabe 20 versehen. Durch Drehverlagerung des Einstellmittels 18 und damit einhergehender Verlagerung derselben entlang ihrer Drehachse ist die Beabstandung des freien Endes des Einstellmittels 18 im Zangenmaul M zu der von dem Einstellmittel 18 im Bereich der Gewindebohrung 19 durchsetzten Schenkelfläche variierbar, wodurch die Größe des durch die Abisolierschneiden 21 und 22 begrenzten Öffnungsquerschnittes im Abisolierbereich 13 anschlagbegrenzt einstellbar ist.

Die gefundene Anschlagstellung des Einstellmittels 18 ist durch eine Halterungsmutter 23 gesichert. Diese kann, wie dargestellt, wandungsaußenseitig umlaufend mit einem Rändel versehen sein. Weiter kann die Halterungsmutter 23, wie dargestellt, im Bereich des Zangenmauls M angeordnet sein.

Das Einstellmittel 18 erstreckt sich im Wesentlichen quergerichtet zur Längserstreckung der Zangenschenkelabschnitte im Arbeitsbereich 7 bzw. 8, weiter bevorzugt etwa im Bereich der halben Erstreckungslänge zwischen dem Gelenk 4 und dem, die Abisolierschneiden 21 und 22 aufweisenden freien Enden der Arbeitsbereiche 7 und 8.

Der dem Gelenk 4 im Wesentlichen unmittelbar nachgeordnete Schneidbereich 12 ist gebildet durch zwei Trennschneiden 24, 25, die bei geschlossenem Zangenmaul M scherenartig übereinandergefahren sind (vgl. Figur 1).

Jeweils eine Trennschneide 24, 25 ist einem Arbeitsbereich 7, 8 zugeordnet, wobei sich die Schneidkanten 26 und 27 der Trennschneiden 24 und 25 jeweils in Längsrichtung der Arbeitsbereiche 7 und 8, bevorzugt in Richtung der Längsmittelebene E erstrecken.

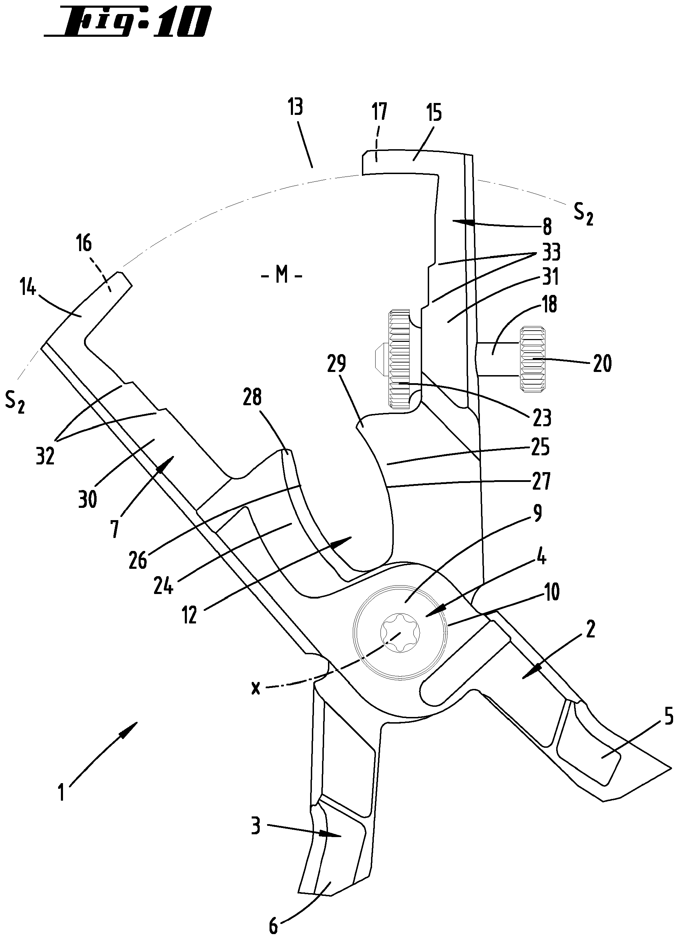

Die Schneidkanten 26 und 27 sind jeweils betrachtet, ausgehend von der gegenüberliegenden Schneidkante, im Grundriss bspw. gemäß Figur 10 konvex gekrümmt gestaltet. So ergeben sich im Bereich der dem Gelenk 4 abgewandten Enden der Trennschneiden 24 und 25 spitzenseitige Abschnitte 28 und 29, die eine Begrenzung hinsichtlich eines Einführbereiches bilden. Bei einer Öffnung gemäß der Darstellung in Figur 10 lassen diese Abschnitte 28 und 29 das Durchstecken oder Durchdrücken eines Werkstückes, bspw. eines Kabels, zu den Trennschneiden 24 und 25 zu. Hiervon nicht betroffen ist die Möglichkeit, eine teilweise geöffnete Abisolierzange 1 von oben bezüglich der Trennschneiden 24 und 25 mit einer Bewegung quer zu der Längsmittelebene E, die zugleich die diesbezügliche Schneidebene S₂ bildet, auf ein Werkstück, etwa einen abzuschneidenden Draht, aufzuschieben oder das Werkstück oder den Draht durch die bei teilweise Öffnung der Abisolierzange 1 durch die Trennscheiden 24 und 25 freigegebene Öffnung hindurchzuführen.

Unabhängig von dem über das Einstellmittel 18 eingestellten Größtmaß a im Abisolierbereich 13 erreichen die Trennschneiden 24 und 25 stets ihre Schließstellung, in welcher ein vollständiges scherenartiges Übereinanderfahren, bevorzugt über die gesamte Erstreckungslänge der Trennschneiden 24 und 25 erreicht ist. So ist die vollständige Schließstellung im Schneidbereich 12 auch erreichbar bei Einstellen eines maximalen Größtmaßes a von bspw. 5 oder 6 mm.

Die beiden sich ergebenden Schneidebenen S₁ und S₂ des Abisolierbereiches 13 und des Schneidbereiches 12 sind im Wesentlichen senkrecht zueinander ausgerichtet, wobei in dem dargestellten Ausführungsbeispiel die Schneidebene S₂ des Schneidbereichs 12 mit der Längsmittelebene E zusammenfällt.

Die Flachseiten 30 und 31 der Zangenschenkelabschnitte in den Arbeitsbereichen 7 und 8, die zumindest annähernd in Richtung der Längsmittelebene E bzw. der Schneidebene S₂ ausgerichtet sind, schließen jeweils zu einer Parallelebene zu der Längsmittelebene E einen spitzen Winkel α von etwa 2 bis 3°, bspw. 2,6° ein derart, dass die Flachseiten 30 und 31 zum freien Ende der Arbeitsbereiche 7 und 8 hin insgesamt konisch verjüngend zueinander verlaufen (vgl. bspw. Figur 4).

Darüber hinaus sind die aufeinander zu weisenden Schenkelflächen der Arbeitsbereiche 7 und 8 im Zangenmaul M mit einer Stufung 32, 33 versehen. Es ergeben sich über die freie Länge zwischen Einstellmittel 18 und dem eingeschwenkten Schenkelabschnitt 14 bzw. 15 zwei in Längserstreckung zueinander beabstandete Stufen. Hierdurch ergibt sich eine stufenartig zunehmende Distanzierung der aufeinander zu weisenden Schenkelflächen im Zangenmaul M ausgehend von dem Bereich des Einstellmittels 18 hin zu den Schenkelabschnitten 14 und 15 (vgl. Figur 1).

Die diesbezüglichen Stufenkanten verlaufen quer zu der Schneidebene S₂ bzw. senkrecht zur Längsmittelebene E.

Im Bereich jeder Stufung 32 bzw. 33 ergibt sich eine Reduzierung des Arbeitsbereich-Schenkelmaßes zwischen der dem Zangenmaul M zugewandten Schenkelfläche und der hierzu abgewandten Schenkelfläche desselben Schenkelabschnitts von etwa 0,5 bis 1,5 mm, weiter bspw. etwa 1 mm.

Durch die Stufung kann eine Orientierungshilfe bei einem Abisolieren unter Nutzung des Abisolierbereiches 13 gegeben sein. Die Beabstandung der Stufen zu dem Abisolierbereich 13, in Längserstreckung der Zangenschenkel 2, 3 betrachtet, ist angepasst an übliche Abisolierlängen, bspw. 11 mm und 16 mm.

Zufolge der vorgeschlagenen Lösung ist eine Abisolierzange 1 mit einem Abisolierbereich 7 und einem als Mittenschneider ausgebildeten Schneidbereich 12 angegeben.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, wobei zwei, mehrere oder alle dieser Merkmalskombinationen auch kombiniert sein können, nämlich:

Eine Abisolierzange, die dadurch gekennzeichnet ist, dass die Trennschneiden 24, 25 als zum scherenartigen Überfahren geeignete Schneiden ausgebildet sind, deren Schneidkanten 26, 27 sich jeweils in Längsrichtung der Arbeitsbereiche 7, 8 erstrecken, und dass das Einstellmittel 18 zum freien Ende des Arbeitsbereiches 7, 8 vorgelagert zu den Trennschneiden 24, 25 angeordnet ist.

Eine Abisolierzange, die dadurch gekennzeichnet ist, dass die Trennschneiden 24, 25 als zum scherenartigen Überfahren geeignete Schneiden ausgebildet sind, deren Schneidkanten 26, 27 sich jeweils in Längsrichtung der Arbeitsbereiche 7, 8 erstrecken, und dass die Trennschneiden im geschlossenen Zustand der Abisolierzange zu einem Größtmaß von bis zu 3, ggf. von bis zu 4 oder 5 mm oder mehr übereinander gefahren sind.

Eine Abisolierzange, die dadurch gekennzeichnet ist, dass die Trennschneiden 24, 25 als Mittenschneiden ausgebildet sind, wobei die Schneidebene S₂ der Schneidkanten 26, 27 in oder unmittelbar benachbart zu einer Längsmittelebene E der Zangenschenkel 2, 3 außerhalb der Trennschneiden 24, 25 und/oder des Gelenks 4 verläuft.

Eine Abisolierzange, die dadurch gekennzeichnet ist, dass an einem oder beiden Arbeitsbereichen 7, 8 innenseitig an einander zugewandten Flächen zwischen dem Einstellmittel 18 und den Abisolierschneiden 21, 22 eine zu den freien Enden der Arbeitsbereiche 7, 8 hin abfallende bzw. sich insgesamt erweiternde Stufung 32, 33 vorgesehen ist, wobei die Stufenkanten quer zu der Schneidebene S₂ der Trennschneiden 24, 25 verlaufen.

Eine Abisolierzange, die dadurch gekennzeichnet ist, dass die Arbeitsbereiche 7, 8 der Zangenschenkel 2, 3 sich außenseitig in Richtung der Schneidebene S₂ der Trennschneiden 24, 25 erstreckende Flachseiten 30, 31 aufweisen und dass zwei gegenüberliegende Flachseiten 30, 31 eines Zangenschenkels 2, 3 zum freien Ende des Arbeitsbereiches 7, 8 hin konisch verjüngend zueinander verlaufen.

Eine Abisolierzange, die dadurch gekennzeichnet ist, dass die Zangenschenkel 2, 3 zur Ausbildung des Gelenks 4 mittels einer Senkkopfschraube 9 zueinander verschraubt sind.

Alle offenbarten Merkmale sind (für sich, aber auch in Kombination untereinander) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren mit ihren Merkmalen eigenständige erfinderische Weiterbildungen des Standes der Technik, insbesondere um auf Basis dieser Ansprüche Teilanmeldungen vorzunehmen.

**Liste der Bezugszeichen**

| | | | |
|---|---|---|---|
| 1 | Abisolierzange | 27 | Schneidkante |
| 2 | Zangenschenkel | 28 | Abschnitt |
| 3 | Zangenschenkel | 29 | Abschnitt |
| 4 | Gelenk | 30 | Flachseite |
| 5 | Griffbereich | 31 | Flachseite |
| 6 | Griffbereich | 32 | Stufung |
| 7 | Arbeitsbereich | 33 | Stufung |
| 8 | Arbeitsbereich | | |
| 9 | Senkkopfschraube | | |
| 10 | Vertiefung | α | Winkel |
| 11 | Gewindebohrung | | |
| 12 | Schneidbereich | | |
| 13 | Abisolierbereich | a | Größtmaß |
| 14 | Schenkelabschnitt | x | Gelenkachse |
| 15 | Schenkelabschnitt | | |
| 16 | Ausnehmung | | |
| 17 | Ausnehmung | E | Längsmittelebene |
| 18 | Einstellmittel | M | Zangenmaul |
| 19 | Gewindebohrung | | |
| 20 | Handhabe | | |
| 21 | Abisolierschneide | S₁ | Schneidebene |
| 22 | Abisolierschneide | S₂ | Schneidebene |
| 23 | Halterungsmutter | | |
| 24 | Trennschneide | | |
| 25 | Trennschneide | | |
| 26 | Schneidkante | | |

## Patentansprüche

1. Abisolierzange (1) mit zwei in einem Gelenk (4) drehbefestigten Zangenschenkeln (2, 3), wobei die Zangenschenkel (2, 3) jeweils einen Arbeitsbereich (7, 8) und einen Griffbereich (5, 6) aufweisen, wobei weiter an den freien Enden der Arbeitsbereiche (7, 8) quergerichtet zu einer Schwenkebene der Zangenschenkel (2, 3) verlaufende Abisolierschneiden (21, 22) ausgebildet sind, die zum gegenseitigen Überfahren gestaltet sind, wobei weiter an einem der Arbeitsbereiche (7, 8) ein Einstellmittel (18), bspw. eine Einstellschraube, vorzugsweise eine Einstellschraube mit einer Halterungsmutter (23) aufgenommen ist, um das Überfahren der Abisolierschneiden (21, 22) einstellbar zu begrenzen, und wobei darüber hinaus an jedem Arbeitsbereich (7, 8) eine Trennschneide (24, 25) vorgesehen ist, wobei die Trennschneide (24, 25) eines Arbeitsbereiches (7, 8) zur Zusammenwirkung mit der Trennschneide (24, 25) des anderen Arbeitsbereiches (7, 8) ausgebildet ist, deren Schneidkanten (26, 27) sich jeweils in Längsrichtung der Arbeitsbereiche (7, 8) erstrecken, **dadurch gekennzeichnet, dass** die Trennschneiden (24, 25) einen als Mittenschneider ausgebildeten Schneidbereich (12) bilden, dass die Trennschneiden (24, 25) als zum scherenartigen Überfahren geeignete Schneiden ausgebildet sind,, dass die Trennschneiden (24, 25) über ihre gesamte Erstreckung, bezogen auf eine Längserstreckung der Abisolierzange (1), in der Geschlossenstellung der Abisolierzange (1) übereinanderliegen und dass das Einstellmittel (18) zum freien Ende des Arbeitsbereiches (7, 8) vorgelagert zu den Trennschneiden (24, 25) angeordnet ist.

2. Abisolierzange (1) nach Anspruch 1, **dadurch gekennzeichnet, dass** das Einstellmittel (18) einen Öffnungsquerschnitt ermöglicht, der ein Größtmaß (a) des Öffnungsquerschnittes von jedenfalls 1 mm, aber auch bspw. bis hin zu 5 mm oder mehr ermöglicht.

3. Abisolierzange nach einem der vorhergehenden Ansprüche, **dadurch gekennzeichnet, dass** die Trennschneiden (24, 25) im geschlossenen Zustand der Abisolierzange zu einem Größtmaß (a) von bis zu 3, ggf. von bis zu 4 oder 5 mm oder mehr übereinander gefahren sind und dass die Trennschneiden (24, 25) maulseitig über ein größeres Maß in Öffnungsrichtung der Abisolierzange (1) übereinanderliegen als gelenkseitig.

4. Abisolierzange nach einem der vorhergehenden Ansprüche, **dadurch gekennzeichnet, dass** eine Schneidebene (S₂) der Schneidkanten (26, 27) in oder unmittelbar benachbart zu einer Längsmittelebene (E) der Zangenschenkel (2, 3) außerhalb der Trennschneiden (24, 25) und/oder des Gelenks (4) verläuft.

5. Abisolierzange nach einem der vorhergehenden Ansprüche, **dadurch gekennzeichnet, dass** an einem oder beiden Arbeitsbereichen (7, 8) innenseitig an einander zugewandten Flächen zwischen dem Einstellmittel (18) und den Abisolierschneiden (21, 22) eine zu den freien Enden der Arbeitsbereiche (7, 8) hin abfallende bzw. sich insgesamt erweiternde Stufung (32, 33) vorgesehen ist, wobei die Stufenkanten quer zu der Schneidebene (S₂) der Trennschneiden (24, 25) verlaufen.

6. Abisolierzange nach einem der vorhergehenden Ansprüche, **dadurch gekennzeichnet, dass** die Arbeitsbereiche (7, 8) der Zangenschenkel (2, 3) sich außenseitig in Richtung der Schneidebene (S₂) der Trennschneiden (24, 25) erstreckende Flachseiten (30, 31) aufweisen und dass zwei gegenüberliegende Flachseiten (30, 31) eines Zangenschenkels (2, 3) zum freien Ende des Arbeitsbereiches (7, 8) hin konisch verjüngend zueinander verlaufen.

7. Abisolierzange nach einem der vorhergehenden Ansprüche, **dadurch gekennzeichnet, dass** die Zangenschenkel (2, 3) zur Ausbildung des Gelenks (4) mittels einer Senkkopfschraube (9) zueinander verschraubt sind.

## Claims

1. Stripping pliers (1) comprising two pliers legs (2, 3) rotatably fastened at a joint (4), the pliers legs (2, 3) each having a working region (7, 8) and a gripping region (5, 6), stripping blades (21, 22) which extend transversely with respect to a pivoting plane of the pliers legs (2, 3) further being formed on the free ends of the working regions (7, 8), which stripping blades are designed to move over one another, an adjusting means (18), for example an adjusting screw, preferably an adjusting screw having a retaining nut (23), further being accommodated on one of the working regions (7, 8) in order to limit the movement of the stripping blades (21, 22) over one another in an adjustable manner, and a cutting blade (24, 25) additionally being provided at each working region (7, 8), the cutting blade (24, 25) of one working region (7, 8) being designed to interact with the cutting blade (24, 25) of the other working region (7, 8), the cutting edges (26, 27) of which cutting blades each extend in the longitudinal direction of the working regions (7, 8), **characterised in that** the cutting blades (24, 25) form a cutting region (12) designed as a centre cutter, **in that** the cutting blades (24, 25) are designed as blades suitable for moving over one another in a scissor-like manner, **in that** the cutting blades (24, 25) lie above one another over the entire extension thereof, based on a longitudinal extension of the stripping pliers (1), in the closed position of the stripping pliers (1), and **in that** the adjusting means (18) is arranged in front of the cutting edges (24, 25) with respect to the free end of the working region (7, 8).

2. Stripping pliers (1) according to claim 1, **characterised in that** the adjusting means (18) allows an opening cross section which allows a maximum dimension (a) of the opening cross section of at least 1 mm, but also, for example, of up to 5 mm or more.

3. Stripping pliers according to either of the preceding claims, **characterised in that**, in the closed state of the stripping pliers, the cutting blades (24, 25) have passed over one another to a maximum dimension (a) of up to 3, possibly up of to 4 or 5 mm or more, and **in that**, on the jaw side, the cutting blades (24, 25) lie above one another over a larger dimension in the opening direction of the stripping pliers (1) than on the joint side.

4. Stripping pliers according to any of the preceding claims, **characterised in that** a cutting plane (S2) of the cutting edges (26, 27) extends in or immediately adjacently to a longitudinal centre plane (E) of the pliers legs (2, 3) outside the cutting blades (24, 25) and/or the joint (4).

5. Stripping pliers according to any of the preceding claims, **characterised in that**, on one or both working regions (7, 8), a step (32, 33) which slopes downwards towards the free ends of the working regions (7, 8) or widens overall is provided on the inside on mutually facing surfaces between the adjusting means (18) and the stripping blades (21, 22), the step edges extending transversely with respect to the cutting plane (S2) of the cutting blades (24, 25).

6. Stripping pliers according to any of the preceding claims, **characterised in that** the working regions (7, 8) of the pliers legs (2, 3) have flat faces (30, 31) extending on the outside in the direction of the cutting plane (S2) of the cutting blades (24, 25) and **in that** two opposite flat faces (30, 31) of a pliers leg (2, 3) extend towards the free end of the working region (7, 8) in a conically tapering manner with respect to one another.

7. Stripping pliers according to any of the preceding claims, **characterised in that** the pliers legs (2, 3) are screwed to one another by means of a countersunk screw (9) in order to form the joint (4).

## Revendications

1. Pince à dénuder (1) avec deux branches de pince (2, 3) montées de manière rotative dans une articulation (4), dans laquelle les branches de pince (2, 3) présentent chacune une zone de travail (7, 8) et une zone de poignée (5, 6), dans laquelle en outre aux extrémités libres des zones de travail (7, 8) sont formées des lames de dénudage (21, 22) qui s'étendent transversalement à un plan de pivotement des branches de pince (2, 3) et qui sont conçues pour se chevaucher mutuellement, dans lequel, en outre, est reçu sur l'une des zones de travail (7, 8), un moyen de réglage (18), par exemple une vis de réglage, de préférence une vis de réglage avec un écrou de retenue (23) pour limiter de manière réglable le chevauchement des lames de dénudage (21, 22), et dans lequel, en outre, une lame de coupe (24, 25) est prévue sur chaque zone de travail (7, 8), la lame de coupe (24, 25) d'une zone de travail (7, 8) étant conçue pour coopérer avec la lame de coupe (24, 25) de l'autre zone de travail (7, 8) et leurs arêtes de coupe (26, 27) s'étendant chacune dans la direction longitudinale des zones de travail (7, 8), **caractérisée en ce que** les lames de coupe (24, 25) forment une zone de coupe (12) conçue comme une pince à coupe centrale, **en ce que** les lames de coupe (24, 25) sont conçues comme des lames adaptées à se déplacer en chevauchement mutuel à la manière de ciseaux, **en ce que** les lames de coupe (24, 25) sont conçues pour être, dans la position fermée de la pince à dénuder (1), en chevauchement sur toute leur extension par rapport à une extension longitudinale de la pince à dénuder (1) et **en ce que** le moyen de réglage (18) est agencé devant les lames de coupe (24, 25) vers l'extrémité libre de la zone de travail (7, 8).

2. Pince à dénuder (1) selon la revendication 1, **caractérisée en ce que** le moyen de réglage (18) permet une section transversale d'ouverture qui permet une dimension maximale (a) de la section transversale d'ouverture d'au moins 1 mm, mais aussi, par exemple, jusqu'à 5 mm ou plus.

3. Pince à dénuder selon l'une des revendications précédentes, **caractérisée en ce que** les lames de coupe (24, 25) sont superposées l'une sur l'autre à l'état fermé de la pince à dénuder jusqu'à une dimension maximale (a) de 3, le cas échéant jusqu'à 4 ou 5 mm ou plus, et **en ce que** les lames de coupe (24, 25) sont superposées l'une sur l'autre du côté de la gueule sur une plus grande dimension dans la direction de l'ouverture de la pince à dénuder (1) que du côté de l'articulation.

4. Pince à dénuder selon l'une des revendications précédentes, **caractérisée en ce qu'**un plan de coupe (S₂) des arêtes de coupe (26, 27) s'étend dans un plan central longitudinal (E) des branches de pince (2, 3) ou directement adjacent de celui-ci, à l'extérieur des lames de coupe (24, 25) et/ou de l'articulation (4).

5. Pince à dénuder selon l'une des revendications précédentes, **caractérisée en ce qu'**un étagement (32, 33) qui descend en pente ou s'élargit globalement vers les extrémités libres des zones de travail (7, 8) est prévu sur la face intérieure de l'une ou des deux zones de travail (7, 8) sur des surfaces se faisant face entre le moyen de réglage (18) et les lames de dénudage (21, 22), les arêtes d'étagement s'étendant transversalement au plan de coupe (S₂) des lames de coupe (24, 25).

6. Pince à dénuder selon l'une des revendications précédentes, **caractérisée en ce que** les zones de travail (7, 8) des branches de pince (2, 3) présentent des côtés plats (30, 31) s'étendant à l'extérieur en direction du plan de coupe (S₂) des lames de coupe (24, 25) et **en ce que** deux côtés plats opposés (30, 31) d'une branche de pince (2, 3) s'étendent en se rétrécissant de manière conique l'un vers l'autre vers l'extrémité libre de la zone de travail (7, 8).

7. Pince à dénuder selon l'une des revendications précédentes, **caractérisée en ce que** les branches de pince (2, 3) sont vissées ensemble au moyen d'une vis à tête fraisée (9) pour former l'articulation (4).
